# EUROPEAN PATENT SPECIFICATION

(11) **EP 2 949 971 B1**
(45) Date of publication and mention of the grant of the patent: **12.02.2020**
(21) Application number: 15168916.3
(22) Date of filing: 22.05.2015
(51) Int. Cl.: F16H 61/47, B60K 31/04, B60W 30/14

(54) **WORKING VEHICLE**
NUTZFAHRZEUG
VÉHICULE DE TRAVAIL

(30) Priority: 26.05.2014 JP 2014108123
(43) Date of publication of application: 02.12.2015
(73) Proprietor: Iseki & Co., Ltd., Matsuyama-shi, Ehime 799-2692 (JP)
(72) Inventor: Kurokawa, Masahiro, Iyo-gun, Ehime 791-2193 (JP)
(74) Representative: Spengler, Robert

(56) References cited:
- EP-A2- 2 551 557
- US-B1- 6 704 637

## Description

### BACKGROUND OF THE INVENTION

### Field of the Invention

The present invention relates to a working vehicle such as a tractor or the like which is for agriculture, for architecture, for transport, or the like.

### Description of the Related Art

Conventionally, a tractor or the like is known, which has an HST (an oil-hydrostatic type non-step transmission device) to travel and has an auto-cruise function (for example, refer to Japanese Patent Application Publication No. 2013-204783, European Patent No. EP1177114B1, and the like).

A tractor of Japanese Patent Application Publication No. 2013-204783 has an HST of a two-stage type, and has a switching switch which switches the Hi and Lo of the HST oil-hydrostatic motor, a cruise speed-increasing switch and a cruise speed-decreasing switch for making slight increase/decrease of the vehicle-speed in an auto-cruise control state, and the like.

### SUMMARY OF THE INVENTION

However, with the conventional tractor, there is a problem that the number of the switches is many.

An object of the present invention is, in consideration of a problem like this of a conventional tractor, to furnish a working vehicle for which the number of the switches is to be decreased.

The 1^{st} aspect of the present invention is a working vehicle (200), comprising:
an engine (4) which is loaded on a traveling-vehicle-body;
a transmission system;
a speed-changing part (21 p) which carries out speed-changing and outputting of motive force of the engine (4);
a speed-changing instructor (7b), manipulated by the worker, which instructs the speed-changing in the speed-changing part (21 p);
a speed-changing manipulation-quantity detecting sensor (31) which detects a manipulation-quantity by the worker on the speed-changing instructor (7b);
a controlling part (100') which controls the speed-changing part (21p) based on the detecting of the speed-changing manipulation-quantity detecting sensor (31);
a switching part (210), manipulated by the worker, which instructs increase/decrease of the output speed stage of the transmission system after the speed-changing in the speed-changing part (21p); and
an auto-cruise switch (7h) which instructs ON/OFF of an auto-cruise mode for keeping vehicle-speed of the traveling-vehicle-body constant,
**characterized in that**
the controlling part (100') (i) accepts, while the auto-cruise mode is in an OFF state, the instruction by the switching part (210) as the instruction of the increase/decrease of the output speed stage of the transmission system after the speed-changing corresponding to the speed-changing instructor (7b), and (ii) accepts, while the auto-cruise mode is in an ON state by the instruction of the auto-cruise switch (7h), the instruction by the switching part (210) as an instruction of slight increase/decrease of the constant vehicle-speed in the auto-cruise mode.

By means of this, since while the auto-cruise mode is in the ON state, the switching part switches to an increase/decrease switch which makes slight increase/decrease of the vehicle-speed in the auto-cruise mode state, the switching part can play two kinds of roles, and the number of the switches is to be decreased.

Furthermore, since while the auto-cruise mode is in the ON state, the switching part switches to an increase/decrease switch which makes slight increase/decrease of the vehicle-speed in the auto-cruise mode state, the switching part can play two kinds of roles and
the number of the switches is to be decreased.

Still further, while the auto-cruise mode is in the OFF state, the switching part can surely play the intrinsic role.

The 2^{nd} aspect of the present invention is the working vehicle (200) according to the above-mentioned 1^{st} aspect of the present invention, wherein
the switching part (210) is a switching lever which is arranged on a periphery of a steering handle (7a) provided in the traveling-vehicle-body.

By means of this, since the switching part is arranged on a periphery of the steering handle, switching manipulation is to be promptly and easily performed, and working efficiency improves. Moreover, since the switching part is a lever, the position of the lever can be easily checked, and manipulability improves.

The 3^{rd} aspect of the present invention is the working vehicle (200) according to any of the above-mentioned 1^{st} or 2^{nd} aspect of the present invention, comprising:
a memory part (110) which memorizes the vehicle speed; and
a memory restoring switch (220) which instructs whether or not to make the vehicle-speed of the traveling-vehicle-body shift to the vehicle-speed memorized in the memory part (110),
wherein the controlling part (100') makes, on an occasion when the auto-cruise mode is switched from an ON state to an OFF state by the auto-cruise switch (7h), the vehicle-speed of the traveling-vehicle-body immediately before manipulation of the switching be memorized in the memory part (110), and
wherein, the controlling part (100') makes, afterward, on an occasion when, after the auto-cruise mode is switched to an ON state by the auto-cruise switch (7h), a shifting instruction of the vehicle-speed is received from the memory restoring switch (220), the vehicle-speed of the travellng-vehicle-body shift to the vehicle-speed memorized in the memory part (110).

By means of this, working is carried out at a certain place with the auto-cruise mode and, subsequently, when road-traveling is carried out, and working is again carried out at the next working place with the auto-cruise mode, the same vehicle-speed as the vehicle-speed of the previous working place is obtained by turning ON the memory restoring switch, which is convenient to a worker.

By the present invention, a working vehicle for which the number of the switches is to be decreased can be furnished.

The 4^{th} aspect of the present invention is the working vehicle (200) according to the 1^{st} aspect, wherein
the speed-changing part (21p) is an oil-hydrostatic pump (21p) which is an inputting part of an oil-hydrostatic type non-step transmission device (11b),
the switching part (210) instructs increase/decrease of a rotation number in a variable oil-hydrostatic motor (121 m) which is an outputting part of the oil-hydrostatic type non-step transmission device (11b),
the speed-changing instructor (7b) is a pedal, and
the controlling part (100') controls the variable oil-hydrostatic motor (121m) based on the instruction of the switching part (210), (i) accepts, while the auto-cruise mode is in an OFF state, the instruction by the switching part (210), not as the instruction in the auto-cruise mode, but as the instruction of two-stage switching of a rotation number in the variable oil-hydrostatic motor to increase/decrease of the speed of the variable oil-hydrostatic motor after the speed-changing corresponding to pedal stepping-on of the speed-changing instructor (7b), and (ii) accepts, while the auto-cruise mode is in an ON state by the instruction of the auto-cruise switch (7h), the instruction by the switching part (210) as the instruction of the slight increase/decrease of the constant vehicle-speed in the auto-cruise mode, while carrying out controlling so that a rotary-motion-quantity of a trunnion shaft (21t) of the oil-hydrostatic pump (21p) becomes constant.

Since the speed-changing instructor is a pedal, speed-changing manipulation is to be promptly and easily performed, and working efficiency improves.

### BRIEF DESCRIPTION OF THE DRAWINGS

FIG. 1 is a side view of the tractor of First Embodiment pertaining to an invention related to the present invention;
FIG. 2 is a plan view of the tractor of First Embodiment;
FIG. 3 is a configuration expansion diagram of the transmission system of the tractor of First Embodiment;
FIG. 4A is a diagram of the inner part configuration and the oil-hydrostatic circuit of the oil-hydrostatic type non-step transmission device of the tractor of First Embodiment, and
FIG. 4B is a diagram of the inner part configuration and the oil-hydrostatic circuit of the oil-hydrostatic type non-step transmission device of the tractor of Second Embodiment;
FIG. 5 is an inputting-outputting block diagram which describes the controlling part of the tractor of First Embodiment;
FIG. 6 is a diagram which shows the relation between the HST pedal stepping-on-quantity and the operation-quantity of the trunnion shaft, which is determined beforehand corresponding to each working mode of the tractor of First Embodiment;
FIG. 7 is a diagram which shows the relation between the vehicle-speed and the changing-rate of the trunnion-operation-angle, in a modified example of First Embodiment;
FIG. 8 is a diagram which shows the relation between the vehicle-speed and the changing-rate of the trunnion-operation-angle, in a modified example of First Embodiment;
FIG. 9 is a diagram which shows the relation between the vehicle-speed and the changing-rate of the trunnion-operation-angle, in a modified example of First Embodiment;
FIG. 10 is an enlarged perspective view in which the Hi-Lo switching lever and the steering handle are viewed from the working seat side, for showing the arrangement relation of the Hi-Lo switching lever and the steering handle, in the tractor of Second Embodiment pertaining to the present invention;
FIG. 11 is an inputting-outputting block diagram which describes the controlling part of the second tractor of Second Embodiment; and
FIG. 12 is a flow diagram of the auto-cruise mode in Second Embodiment.

### Description of the Reference Numerals

- 1: tractor
- 2, 3: traveling-vehicle-wheel
- 4: engine
- 4a: engine room
- 7: working seat
- 7a: steering handle
- 7b: HST pedal
- 7d: auxiliary speed-changing lever
- 7h: auto-cruise switch
- 210: Hi-Lo switching lever

### DESCRIPTION OF THE EMBODIMENTS

In the following, referring to the drawings, descriptions are given regarding a tractor of an embodiment of a working vehicle of the present invention, and a tractor of an embodiment of the present invention.

### First Embodiment

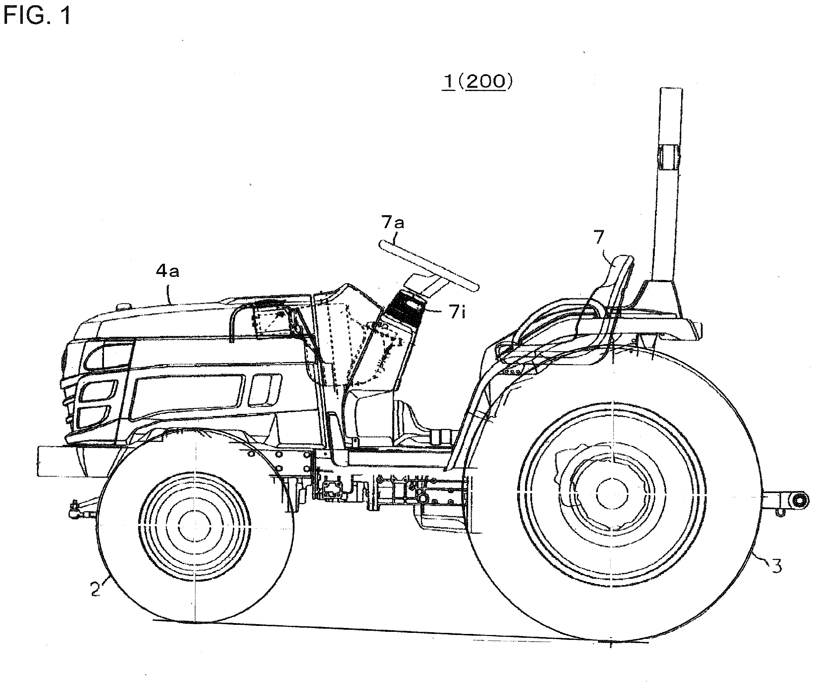

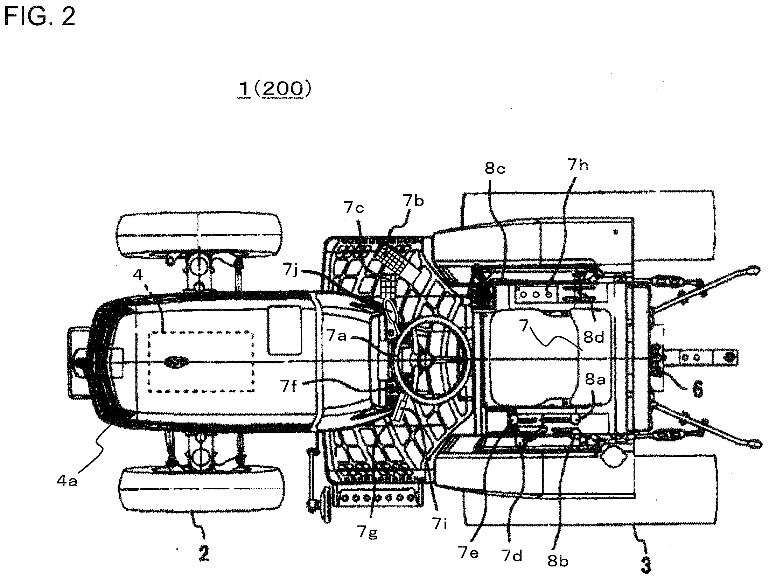

FIG. 1 is an overall configuration side view of the tractor as one example of a working vehicle of the present invention, and FIG. 2 is an overall configuration plan view of the said tractor.

As shown in FIGs. 1 and 2, the tractor 1 supports the machine-body by traveling-vehicle-wheels 2 and 3 of the front-and-rear in such a manner that farm field working is able to be carried out, and performs working with a working machine installed at the front part of the machine-body or the rear part. Motive force transmitting to the traveling-vehicle-wheels 2 and 3 is performed with motive force from an engine 4 received which is loaded inside an engine room 4a of the machine-body front part. To the traveling-vehicle-wheels 2 and 3, non-step speed-changing transmission of the motive force is carried out for which speed-changing has been carried out at an auxiliary speed-changing mechanism 12 (stepped speed-changing) of a speed-changing device 5 and an oil-hydrostatic type non-step transmission device (an HST) 11. Moreover, out of the motive force which has been inputted to the oil-hydrostatic type non-step transmission device 11, the motive force for which non-step speed-changing is not carried out is transmitted to a working motive force supplying part 6 which is abbreviatedly called a PTO. The working motive force supplying part 6 is configured from a PTO mechanism 16a of the machine-body rear part and a PTO mechanism 16b of the machine-body central lower part.

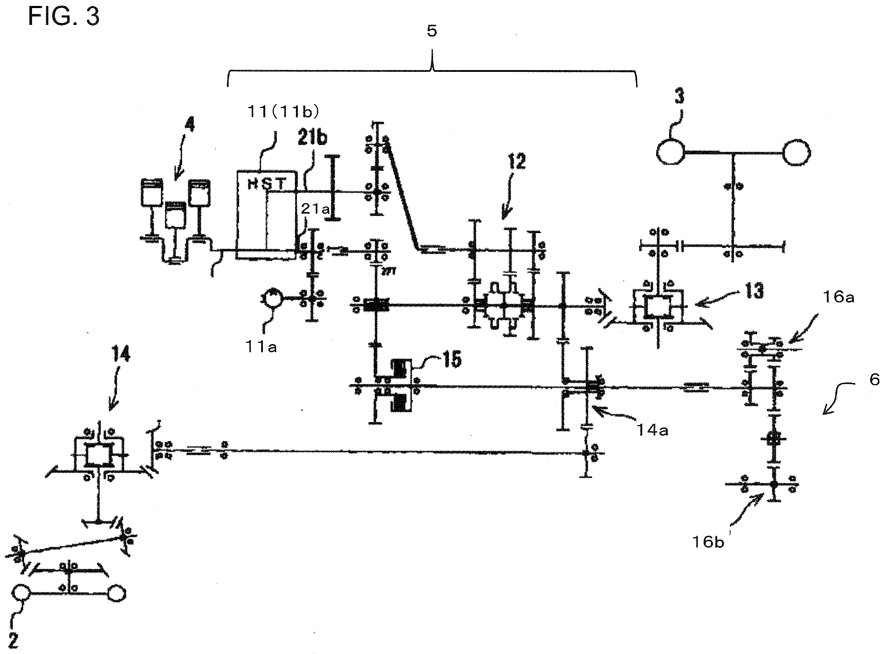

Moreover, on a periphery of a working seat 7, various instrument manipulators are provided. Provided for traveling-manipulation are a steering handle 7a, an HST pedal 7b, a left-and-right set of brake pedals 7c (used as the left brake pedal and the right brake pedal by connection canceling), an auxiliary speed-changing lever 7d, a 4WD lever 7e which switches rear-wheel-driving and four-wheel-driving, an emergency stop switch 7f which carries out an emergency stop of the engine, a winker switch 7g, an auto-cruise switch 7h, and the like. Provided for working-machine-manipulation are PTO levers 8a and 8b of the rear and the mid, a position lever 8c which decides the ascending-and-descending position of the working machine being installed, a frontward/rearward movement lever 7i, a throttle lever 7j which sets up the engine rotation number, a bipartite outer part oil-hydrostatic lever 8d which drives another oil-hydrostatic instrument, and the like. The auxiliary speed-changing lever 7d is a lever which performs speed-changing manipulation of the auxiliary speed-changing mechanism 12 of stepped speed-changing shown in FIG 3, and the configuration is such that three-stepped speed-changing is able to be carried out.

Here, FIG. 3 is a configuration expansion diagram of the transmission system of the tractor 1 of the present embodiment.

Moreover, if the auto-cruise switch 7h is made to be in the ON state, then the auto-cruise mode gets into the ON state, and the configuration is such that even if the foot is released from the HST pedal 7b, the vehicle-speed at the point in time when the auto-cruise mode has been made to be in the ON state continues to be maintained. Specifically, the configuration is such that, in the auto-cruise mode, the rotary-motion position of a trunnion shaft 21t is maintained which is for outputting adjustment of an oil-hydrostatic pump 21p of the non-step transmission device 11.

In the traveling-transmission system by the speed-changing device 5, the non-step transmission device 11 of an oil-hydrostatic type which receives engine motive force and is abbreviatedly called an HST, and the auxiliary speed-changing mechanism 12 which switches the vehicle-speed-ranges are serially arranged from the motive force transmitting upstream side to the downstream side, and transmission is carried out to a transmission mechanism 13 of the rear wheels 3 and the like (refer to FIG. 3).

To the traveling-transmission system, instrument action sensors by a rotation sensor 4r of the engine 4, a vehicle-speed sensor 12r, and the like are provided, and the speed-changing system is configured by a controlling part 100 which controls, based on the outputting from an HST pedal stepping-on-quantity detecting sensor 31 which detects the stepping-on-quantity of the HST pedal 7b by a speed-changing instructor such as the HST pedal 7b or the like, the oil-hydrostatic type non-step transmission device 11.

Moreover, to the tractor 1 of the present embodiment, a mode switching switch 32 is provided which performs an instruction to switch various modes for distinguishing various kinds of working which include road-traveling, and the switching result of the modes by the mode switching switch 32 is outputted to the controlling part 100.

The speed-changing device 5 has, as the transmission system expansion diagram is shown in FIG. 3, traveling-system instruments by the oil-hydrostatic type non-step transmission device 11, the auxiliary speed-changing mechanism 12, the rear wheel transmission mechanism 13, a 4WD switching part 14a which leads to a front wheel transmission mechanism 14, and the like.

Non-step speed-changing is carried out at the oil-hydrostatic type non-step transmission device 11 regarding each vehicle-speed-range by the auxiliary speed-changing mechanism 12 which selects a vehicle-speed-range in the range from the working-speed to the road-speed, and transmission outputting of the motive force for which the speed-changing has been carried out is carried out to the front-and-rear wheels 2 and 3.

Moreover, out of the motive force which has been inputted from the engine 4 to the oil-hydrostatic type non-step transmission device 11, the motive force for which non-step speed-changing is not carried out makes, through a PTO clutch 15, from the PTO mechanisms 16a and 16b of the rear and the mid, the working machine operate. Namely, an outputting shaft 21a regarding the outputting from the engine 4 which has been inputted to the oil-hydrostatic type non-step transmission device 11 protrudes to the opposite side of the engine 4 (the side of the speed-changing device 5), and the configuration is such that via plural gears the motive force is transmitted to the PTO clutch 15. By means of this, the configuration becomes such that the rear PTO mechanism 16a and the mid PTO mechanism 16b rotate with constant rotation.

The reference numeral 11a denotes the charge pump of the oil-hydrostatic type non-step transmission device 11, and is internally installed inside the transmission case which encloses the speed-changing device 5. The rear PTO mechanism 16a drives a rotary, a snow-removing machine, a mower, or the like which is installed to the machine-body rear part. The mid PTO mechanism 16b drives a mower, a snow-removing machine, a road-cleaning machine, or the like which is installed to the machine-body lower part between the front wheels 2 and the rear wheels 3.

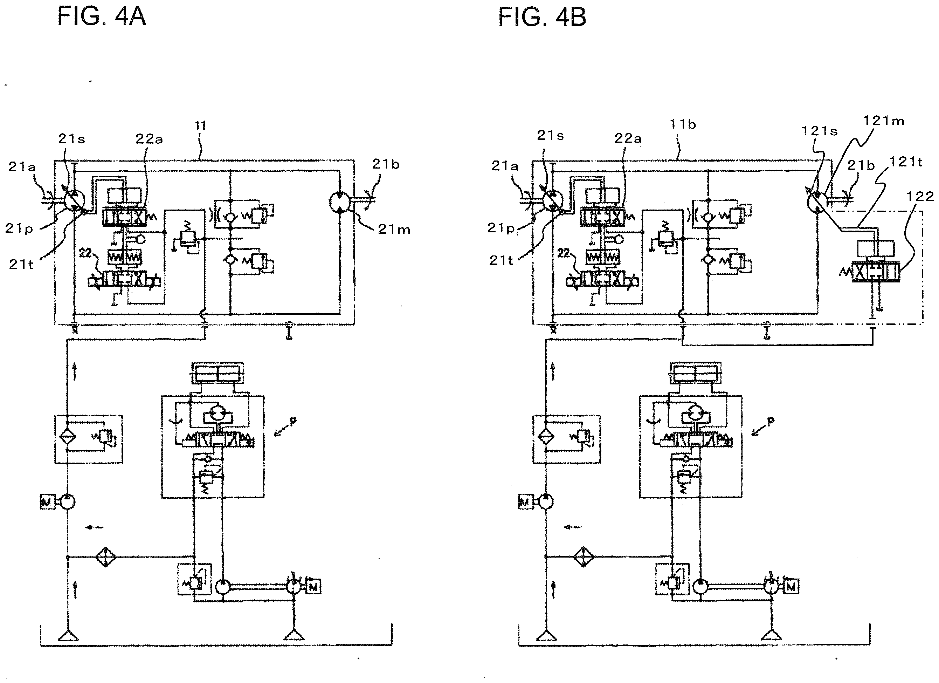

The oil-hydrostatic type non-step transmission device 11 is, as the inner part configuration and the oil-hydrostatic circuit are shown in FIG. 4A, configured by the oil-hydrostatic pump 21p of a variable outputting type which is driven by engine motive force, and a constant-quantity oil-hydrostatic motor 21m which receives pump outputting of the oil-hydrostatic pump 21p.

Here, FIG. 4A is a diagram of the inner part configuration and the oil-hydrostatic circuit of the oil-hydrostatic type non-step transmission device 11.

The oil-hydrostatic pump 21p is driven with direct connection with the outputting shaft 21a from the engine 4. Provided in the oil-hydrostatic pump 21p is the trunnion shaft 21t which is for outputting adjustment, and the angle of a swash plate 21s is changed with rotary-motion of the trunnion shaft 21t. Performed by the angle position of the swash plate 21s is flowing-quantity adjustment which includes alteration of the oil-feeding direction of the operation-oil and an outputting stop, the constant-quantity oil-hydrostatic motor 21m is driven, and carried out is transmission outputting of the normal/reverse speed-changing rotation motive force which includes neutrality in the sense of a stop of the outputting from an outputting shaft 21b of the constant-quantity oil-hydrostatic motor 21m.

Regarding trunnion-angle controlling of the oil-hydrostatic pump 21p, the configuration is made to be such that, by HST controlling of the servo mechanism, the operation-oil flowing-quantity is adjusted by the driving electric current to a proportional solenoid valve (including a trunnion frontward movement side solenoid, and a trunnion rearward movement side solenoid) 22.

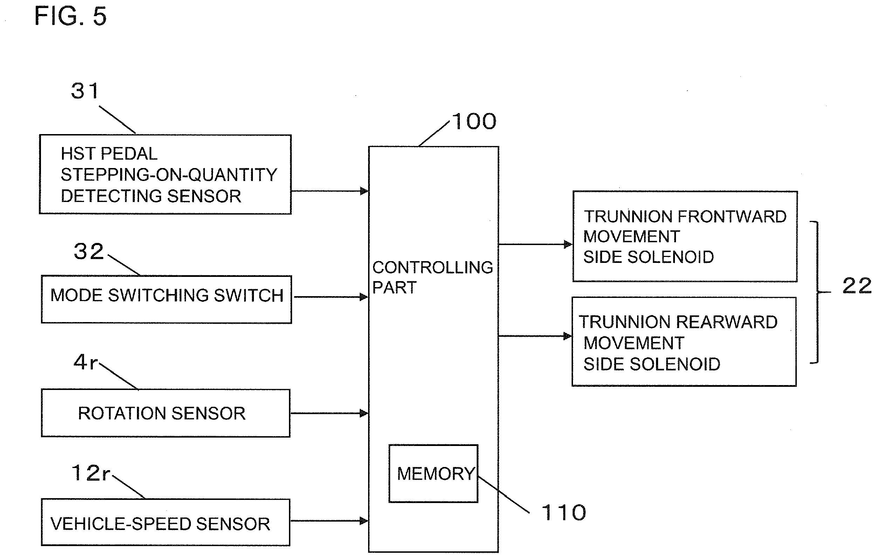

Namely, the controlling part 100 controls, as shown in FIG. 5, corresponding to the mode which has been instructed by the mode switching switch 32, the changing-quantity of the rotary-motion angle of the trunnion shaft 21t of the oil-hydrostatic type non-step transmission device 11 with respect to the stepping-on-quantity which has been detected by the HST pedal stepping-on-quantity detecting sensor 31. Here, FIG. 5 is an inputting-outputting block diagram which describes the controlling part 100 of the tractor 1 of the present embodiment.

Since the configuration is made to be such that the operation-oil flowing-quantity is adjusted with altering the duty ratio of the electric current, rotary-motion of the trunnion shaft 21t is carried out to the rotary-motion position corresponding to the electric current value which has been altered. Moreover, a switching valve 22a is configured at the downstream side of the proportional solenoid valve 22, and the configuration is made to be such that the rotary-motion direction of the trunnion shaft 21t, namely, the normal/reverse direction of the outputting shaft 21b is determined with the switching valve 22a. The reference numeral P shows the oil-hydrostatic circuit of the power steering.

In the above configuration, utilizing the drawings, descriptions are given below regarding the pattern of the operation-quantity of the trunnion shaft, which is determined beforehand corresponding to each mode, and the action of each part.

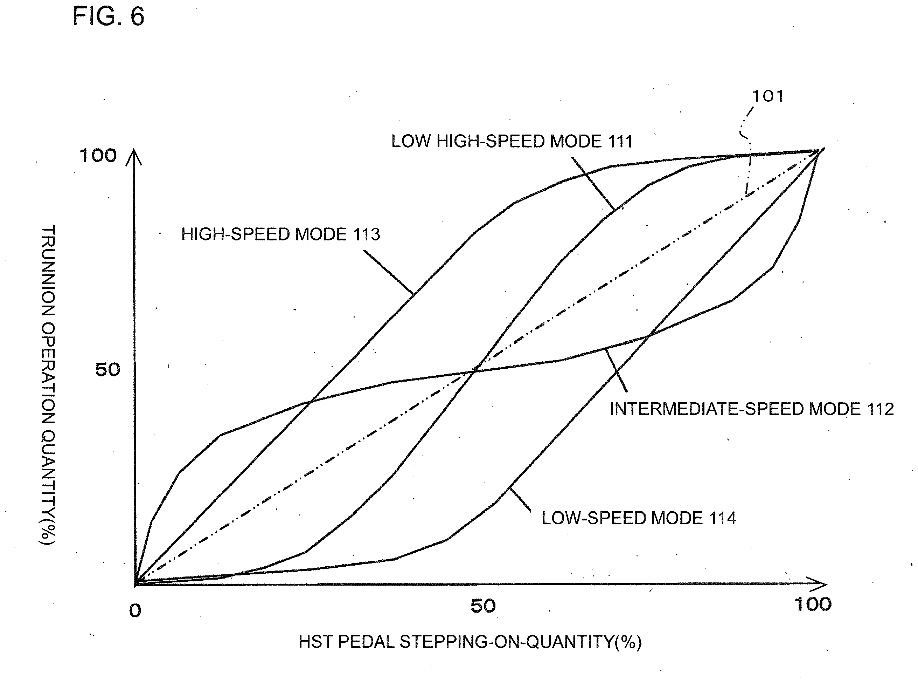

FIG. 6 is a diagram which shows the relation between the HST pedal stepping-on-quantity and the operation-quantity of the trunnion shaft, which is determined beforehand corresponding to each working mode of the tractor 1 of the present embodiment.

Additionally, the relation between the HST pedal stepping-on-quantity and the operation-quantity of the trunnion shaft, which is shown in FIG. 6, is stored beforehand in a memory 110 (refer to FIG. 5).

Descriptions are given regarding the relation between the HST pedal stepping-on-quantity and the operation-quantity of the trunnion shaft, which is shown in FIG. 6 as a low high-speed mode 111.

If the worker manipulates the mode switching switch 32 and sets up the low high-speed mode 111, then the outputting is sent to the controlling part 100 and the correspondence relation, which is for the low high-speed mode 111 and is stored in the memory 110, is read out. This mode is suitable for a case where, for example, road-traveling is carried out with a heavy working machine being towed.

And, if the worker steps on the HST pedal 7b, then the controlling part 100 controls, corresponding to the low high-speed mode 111 which has been read out from the memory 110, the changing-quantity of the operation angle of the trunnion shaft 21t of the oil-hydrostatic type non-step transmission device 11 with respect to the stepping-on-quantity which has been detected by the HST pedal stepping-on-quantity detecting sensor 31.

By setting up this mode, since, as shown in FIG. 6, when the worker, in comparison with a conventional linear-changing characteristic 101, at the time of starting-out, wants to slowly move the tractor 1, at the beginning of stepping on the HST pedal 7b, the operation-quantity of the trunnion shaft 21t gently transitions, even if no attention is paid to the degree of stepping on the HST pedal 7b, slow starting-out can be carried out. Moreover, even at the time of maximum-high-speed-traveling, since the operation-quantity of the trunnion shaft 21t, with respect to the stepping-on-quantity of the HST pedal 7b, gently transitions, adjustment of the traveling-speed of the tractor 1 is to be easily performed because the speed never sharply changes.

Moreover, if the worker manipulates the mode switching switch 32 and sets up an intermediate-speed mode 112, then the outputting is sent to the controlling part 100 and the correspondence relation, which is for the intermediate-speed mode 112 and is stored in the memory 110, is read out. This mode is suitable for a case such as lawn mowing working or the like where, for example, working is carried out with traveling being carried out at constant speed.

And, if the worker steps on the HST pedal 7b, then the controlling part 100 controls, corresponding to the intermediate-speed mode 112 which has been read out from the memory 110, the changing-quantity of the operation angle of the trunnion shaft 21t of the oil-hydrostatic type non-step transmission device 11 with respect to the stepping-on-quantity which has been detected by the HST pedal stepping-on-quantity detecting sensor 31.

By setting up this mode, as shown in FIG. 6, in comparison with the conventional linear-changing characteristic 101, at the time of starting-out, the tractor 1 promptly reaches the constant speed and, afterward, in the intermediate range where the operation-quantity of the trunnion shaft 21t, with respect to the stepping-on-quantity of the HST pedal 7b, gently transitions, without too sensitive reaction to the stepping-on-quantity of the HST pedal 7b, the above-mentioned constant speed is easy to maintain. Accordingly, this mode is a mode suitable, for example, at the time of working-traveling in a farm field.

Moreover, if the worker manipulates the mode switching switch 32 and sets up a high-speed mode 113, then the outputting is sent to the controlling part 100 and the correspondence relation, which is for the high-speed mode 113 and is stored in the memory 110, is read out. This mode is suitable for a case where, for example, road-traveling at high speed is carried out in a state without a working machine.

And, if the worker steps on the HST pedal 7b, then the controlling part 100 controls, corresponding to the high-speed mode 113 which has been read out from the memory 110, the changing-quantity of the operation angle of the trunnion shaft 21t of the oil-hydrostatic type non-step transmission device 11 with respect to the stepping-on-quantity which has been detected by the HST pedal stepping-on-quantity detecting sensor 31.

By setting up this mode, since, as shown in FIG. 6, in comparison with the conventional linear-changing characteristic 101, even at the time of maximum-high-speed-traveling, the operation-quantity of the trunnion shaft 21t, with respect to the stepping-on-quantity of the HST pedal 7b, gently transitions, adjustment of the traveling-speed of the tractor 1 is to be easily performed because the speed never sharply changes.

Moreover, if the worker manipulates the mode switching switch 32 and sets up a low-speed mode 114, then the outputting is sent to the controlling part 100 and the correspondence relation, which is for the low-speed mode 114 and is stored in the memory 110, is read out. This mode is suitable for a case where, for example, road-cleaning at low speed is carried out.

And, if the worker steps on the HST pedal 7b, then the controlling part 100 controls, corresponding to the low-speed mode 114 which has been read out from the memory 110, the changing-quantity of the operation angle of the trunnion shaft 21t of the oil-hydrostatic type non-step transmission device 11 with respect to the stepping-on-quantity which has been detected by the HST pedal stepping-on-quantity detecting sensor 31.

By setting up this mode, since, as shown in FIG. 6, when the worker, in comparison with the conventional linear-changing characteristic 101, at the time of starting-out, wants to slowly move the tractor 1, at the beginning of stepping on the HST pedal 7b, the operation-quantity of the trunnion shaft 21t gently transitions, even if no attention is paid to the degree of stepping on the HST pedal 7b, slow starting-out can be carried out.

As described above, by the tractor 1 of the present embodiment, even if no attention is paid to the degree of stepping on the HST pedal 7b, since the operation-quantity of the trunnion shaft 21t which is suited to the setting up of each mode by the mode switching switch 32 is decided, speed adjustment is to be easily and appropriately performed.. Namely, it becomes unnecessary to concentrate his or her attention on the degree of stepping on the HST pedal 7b (there is no fear of excessively stepping on at the time of slight adjustment), and fatigue reducing of the worker is contemplated.

Additionally, in Second Embodiment to be described later, descriptions will be given regarding a configuration where the mechanism which instructs switching of a stage switching valve 122 is of a lever type but, not being limited to this, for example, such a configuration of a push type may be allowed.

Moreover, in the above-mentioned embodiment, descriptions have been given regarding the configuration where each mode is set up by the mode switching switch 32 but, not being limited to this, for example, such a configuration may be allowed that, with the mode switching switch 32 not being provided, the changing-quantity of the operation-angle of the trunnion shaft 21t with respect to the stepping-on-quantity of the HST pedal 7b is made to be small at the time when the stepping-on-quantity is on the minimum value side, and at the time when the stepping-on-quantity is on the maximum value side, in comparison with the time when the stepping-on-quantity is on the intermediate values.

By this configuration, since, when the worker, in comparison with the conventional linear-changing characteristic 101 (refer to FIG. 6), at the time of starting-out, wants to slowly move the tractor 1, at the beginning of stepping on the HST pedal 7b, the operation-quantity of the trunnion shaft 21t gently transitions, even if no attention is paid to the degree of stepping on the HST pedal 7b, slow starting-out can be carried out. Moreover, even at the time of maximum-high-speed-traveling, since the operation-quantity of the trunnion shaft 21t, with respect to the stepping-on-quantity of the HST pedal 7b, gently transitions, adjustment of the traveling-speed of the tractor 1 is to be easily performed because the speed never sharply changes (refer to the low high-speed mode 111 of FIG. 6).

Moreover, in the above-mentioned embodiment, descriptions have been given regarding the configuration where each mode is set up by the mode switching switch 32 but, not being limited to this, for example, such a configuration may be allowed that, with the mode switching switch 32 not being provided, the changing-quantity of the operation-angle of the trunnion shaft 21t with respect to the stepping-on-quantity of the HST pedal 7b is made to be small at the time when the stepping-on-quantity is on the intermediate values, in comparison with the time when the stepping-on-quantity is on the minimum value side, and the time when the stepping-on-quantity is on the maximum value side.

By this configuration, in comparison with the conventional linear-changing characteristic 101 (refer to FIG. 6), at the time of starting-out, the tractor 1 promptly reaches the constant speed and, afterward, in the intermediate range where the operation-quantity of the trunnion shaft 21t, with respect to the stepping-on-quantity of the HST pedal 7b, gently transitions, without too sensitive reaction to the stepping-on-quantity of the HST pedal 7b, the above-mentioned constant speed is easy to maintain. Accordingly, slight adjustment of the traveling-speed of the tractor 1 is to be easily performed (refer to the intermediate-speed mode 112 of FIG. 6).

Moreover, in the above-mentioned embodiment, descriptions have been given regarding the configuration where each mode is set up by the mode switching switch 32 but, not being limited to this, for example, such a configuration may be allowed that, with an auxiliary speed-changing lever position sensor (not shown) which detects the lever position of the auxiliary speed-changing lever 7d being provided, the detection result of the auxiliary speed-changing lever position sensor, namely, the detection result of any of the L-speed, the H-speed, and the M-speed is sent to the controlling part 100.

By this configuration, when the detection result is the L-speed, the operation-quantity of the trunnion shaft 21t in correspondence to the low-speed mode 114 described in FIG. 6 is decided, when the detection result is the H-speed, the operation-quantity of the trunnion shaft 21t in correspondence to the high-speed mode 113 described in FIG. 6 is decided and, when the detection result is the M-speed, the operation-quantity of the trunnion shaft 21t in correspondence to the intermediate-speed mode 112 described in FIG. 6 is decided. By means of this, effects similar to the above-mentioned are exerted.

Moreover, in the above-mentioned embodiment, descriptions have been given regarding the configuration where in correspondence to the mode which has been set up by the mode switching switch 32, the relation between the HST pedal stepping-on-quantity and the trunnion shaft operation-quantity is decided but, not being limited to this, for example, such a configuration may be allowed that response dial switches (not shown) which can arbitrarily alter the trunnion operation-quantity with respect to the HST pedal stepping-on-quantity are provided separately at the frontward-movement-traveling side and at the rearward-movement-traveling side.

By means of this, even in a case where there are individual differences in the characteristic of the frontward/rearward movement of the HST 11 and operation-feelings of the frontward/rearward movement slightly differ, setting up of the frontward movement and the rearward movement, in conformity to the preference of the worker, becomes able to be carried out.

Moreover, at a time of working for which rearward movement is mainly performed, since when the worker wants to make operation of the rearward movement be more swiftly carried out than operation of the frontward movement, the operation of the rearward movement can be arbitrarily altered, workability improves.

Moreover, not being limited to the above-mentioned configurations, for example, such a configuration may be allowed that maximum-high-speed-regulating dial switches which can arbitrarily alter the maximum operation-quantity of the trunnion shaft 21t with respect to the HST pedal stepping-on-quantity are provided separately at the frontward movement side and at the rearward movement side.

By means of this, even in a case where there are individual differences in the characteristic of the frontward/rearward movement of the HST 11 and operation-feelings of the frontward/rearward movement slightly differ, setting up of the frontward movement and the rearward movement, in conformity to the preference of the worker, becomes able to be carried out.

Moreover, at a time of working for which rearward movement is mainly performed, since when the worker wants to make, while making the maximum high speed at the time of rearward movement be small, the maximum high speed at the time of frontward movement be large with a high value being set on the frontward movement motion, these maximum high speeds can be arbitrarily altered, workability improves.

Moreover, not being limited to the above-mentioned configurations, for example, such a configuration may be allowed that the changing-rate of the operation-angle of the trunnion shaft 21t with respect to the HST pedal stepping-on-quantity is made to get large corresponding to the vehicle-speed.

By means of this, because the configuration is such that when the worker, at the time of starting-out, wants to slowly move the tractor, the operation-quantity of the trunnion shaft is made to be small at a time when the vehicle-speed is low, slow starting-out can be carried out without attention being paid to the stepping-on-quantity of the HST pedal, and motion and working becomes able to be safely carried out even inside a narrow warehouse, or at a farm field corner or the like.

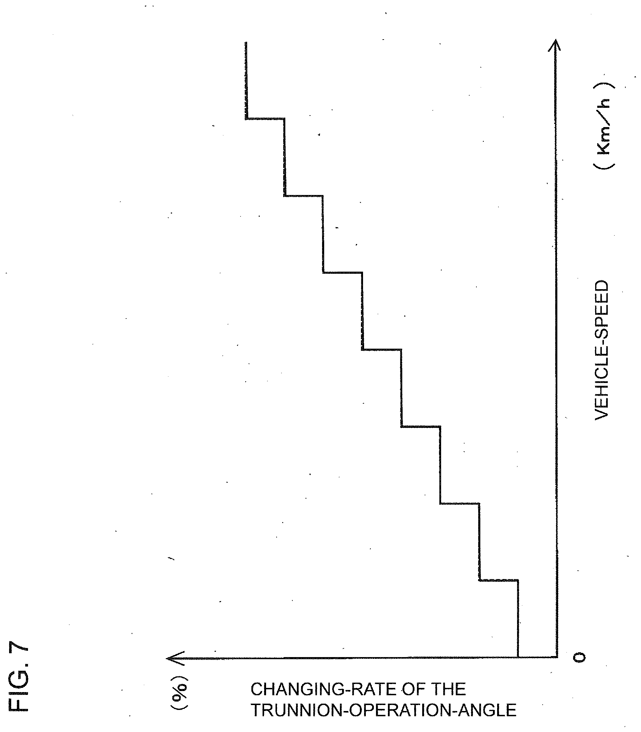

Moreover, not being limited to the above-mentioned configurations, for example, such a configuration may be allowed that (1) the changing-rate of the operation-angle of the trunnion shaft 21t with respect to the HST pedal stepping-on-quantity is made to get large corresponding to the vehicle-speed, and (2) setting up is carried out in such a manner that, with the vehicle-speed controlling widths being provided, the changing-rate of the operation-angle of the trunnion shaft is made to be the same inside the range of each of the vehicle-speed controlling widths, and is made to, as the vehicle-speed increases, stepwisely get large. Here, FIG. 7 is a diagram which shows the relation between the vehicle-speed and the changing-rate of the trunnion-operation-angle.

By means of this, because the configuration is such that when the worker, at the time of starting-out, wants to slowly move the tractor, the operation-quantity of the trunnion shaft is made to be small at a time when the vehicle-speed is low, slow starting-out can be carried out without attention being paid to the stepping-on-quantity of the HST pedal, and motion and working becomes able to be safely carried out even inside a narrow warehouse, or at a farm field corner or the like. Moreover, even when the speed is fast, the speed setting up is easy since the changing-quantity at the time of slight adjustment becomes constant.

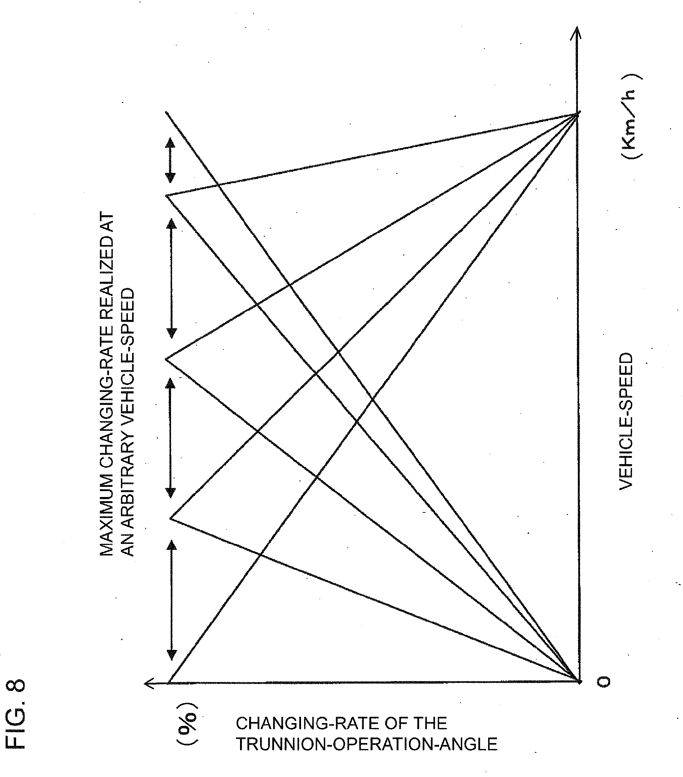

Moreover, not being limited to the above-mentioned configurations, for example, as shown in FIG. 8, such a configuration may be allowed that (1) the changing-rate of the operation-angle of the trunnion shaft 21t with respect to the HST pedal stepping-on-quantity is altered based on the vehicle-speed, and (2) a vehicle-speed control switch (not shown) is provided which can carry out setting up in such a manner that the maximum changing-rate is realized at an arbitrary vehicle-speed. Here, FIG. 8 is a diagram which shows the relation between the vehicle-speed and the changing-rate of the trunnion-operation-angle.

By means of this, since the maximum changing-rate can be arbitrarily altered, speed adjustment which is suited to working becomes able to be carried out.

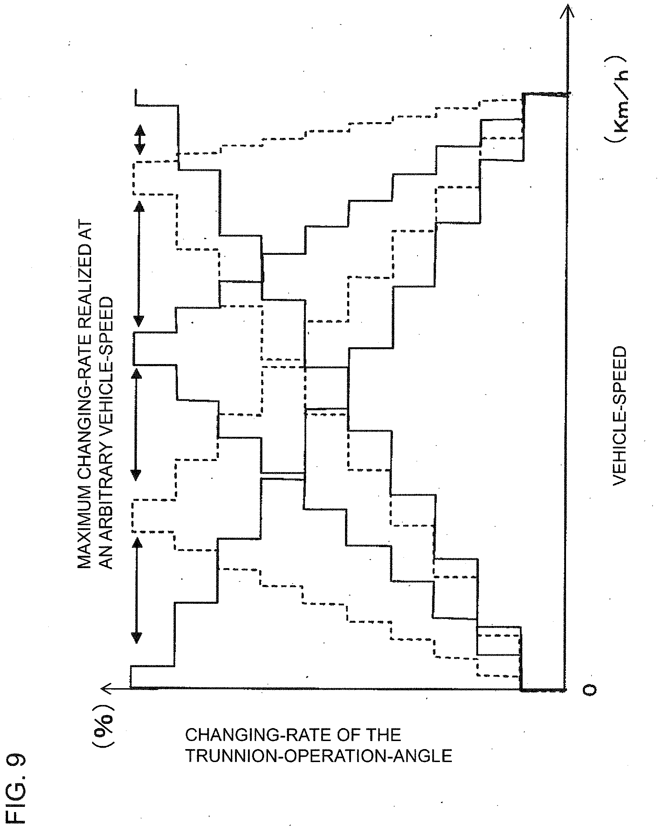

Moreover, not being limited to the above-mentioned configurations, for example, as shown in FIG. 9, such a configuration may be allowed that (1) the changing-rate of the operation-angle of the trunnion shaft 21t with respect to the HST pedal stepping-on-quantity is altered based on the vehicle-speed, (2) a vehicle-speed control switch (not shown) is provided which can carry out setting up in such a manner that the maximum changing-rate is realized at an arbitrary vehicle-speed, and (3) setting up is carried out in such a manner that, with the vehicle-speed controlling widths being provided, the changing-rate of the operation-angle of the trunnion shaft is made to be the same inside the range of each of the vehicle-speed controlling widths and, with the vehicle-speed which has been set up with the vehicle-speed control switch to realize the maximum changing-rate being the center, stepwisely changes. Here, FIG. 9 is a diagram which shows the relation between the vehicle-speed and the changing-rate of the trunnion-operation-angle.

By means of this, since the vehicle-speed which realizes the maximum changing-rate can be arbitrarily altered, speed adjustment which is suited to working becomes able to be carried out.

### Second Embodiment

Next, descriptions are given regarding the second tractor 200 as one example of a working vehicle of the present invention.

For a start, descriptions are given regarding the configuration of the second tractor 200 but, since substantially the same is true regarding the configuration elements for which descriptions have been given in the above-mentioned First Embodiment utilizing FIGs. 1 to 3, the same numerals for reference are assigned regarding the configuration elements which have substantially the same functions, and descriptions are omitted.

Moreover, as to the HST 11 of the above-mentioned First Embodiment, descriptions have been given with the oil-hydrostatic motor being the constant-quantity oil-hydrostatic motor 21m (refer to FIG. 4A) where no swash plate is provided, but a second oil-hydrostatic type non-step transmission device 11b (a second HST 11b) of the present Second Embodiment has, as shown in FIG. 4B, a variable oil-hydrostatic motor 121m where a swash plate 121s is provided. And, for the second HST 11b of the present Second Embodiment, the configuration is made to be such that two-stepped switching of the outputting of the variable oil-hydrostatic motor 121m is able to be carried out for the high speed and the low speed, which is said to be the two-stage switching of the variable oil-hydrostatic motor 121m which has the swash plate 121s.

Additionally, the oil-hydrostatic pump 21p of the present Second Embodiment corresponds to one example of a speed-changing part of the present invention, and a Hi-Lo switching lever 210 of the present Second Embodiment corresponds to one example of a switching part of the present invention.

Moreover, in the present Second Embodiment, descriptions are given regarding the configuration where the second oil-hydrostatic type non-step transmission device 11b (the second HST 11b) which has the variable oil-hydrostatic motor 121m is utilized but, not being limited to this, for example, such a configuration may be allowed that, with the HST 11 of the above-mentioned First Embodiment being utilized instead of the second oil-hydrostatic type non-step transmission device 11b, a means which performs increase/decrease of the outputting of the constant-quantity oil-hydrostatic motor 21m is provided at the downstream side of the HST 11.

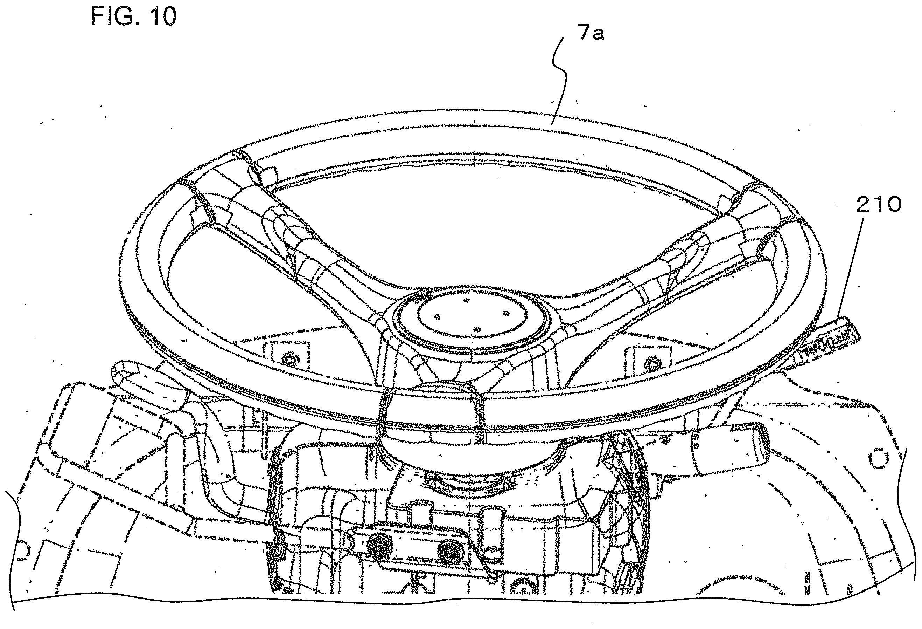

Two-stage switching for the low speed side and the high speed side is performed with making rotary-motion of the swash plate 121s be carried out with a trunnion shaft 121t at the side of the variable oil-hydrostatic motor 121m, and the operation angle of the trunnion shaft 121t is switched by the stage switching valve 122. And, the Hi-Lo switching lever 210 which instructs switching of the stage switching valve 122 is arranged in the neighborhood of the lower part of the steering handle 7a (refer to FIG. 10).

Namely, since the mechanism which instructs switching of the stage switching valve 122 is made not to be a switch of a push type, but to be a switch of a lever type, the position of the lever can be easily checked at the time of manipulation. Moreover, since the Hi-Lo switching lever 210 is arranged in the neighborhood of the lower part of the steering handle 7a, switching manipulation is to be promptly and easily performed, speed-changing loss is small, and working efficiency improves. From the above, by this configuration, a sense of manipulation is good in comparison with a conventional one, and improvement of manipulability is contemplated.

In the present Second Embodiment, the stage switching valve 122 switches to the Hi if the Hi-Lo switching lever 210 is manipulated upward, and the stage switching valve 122 switches to the Lo if the Hi-Lo switching lever 210 is manipulated downward.

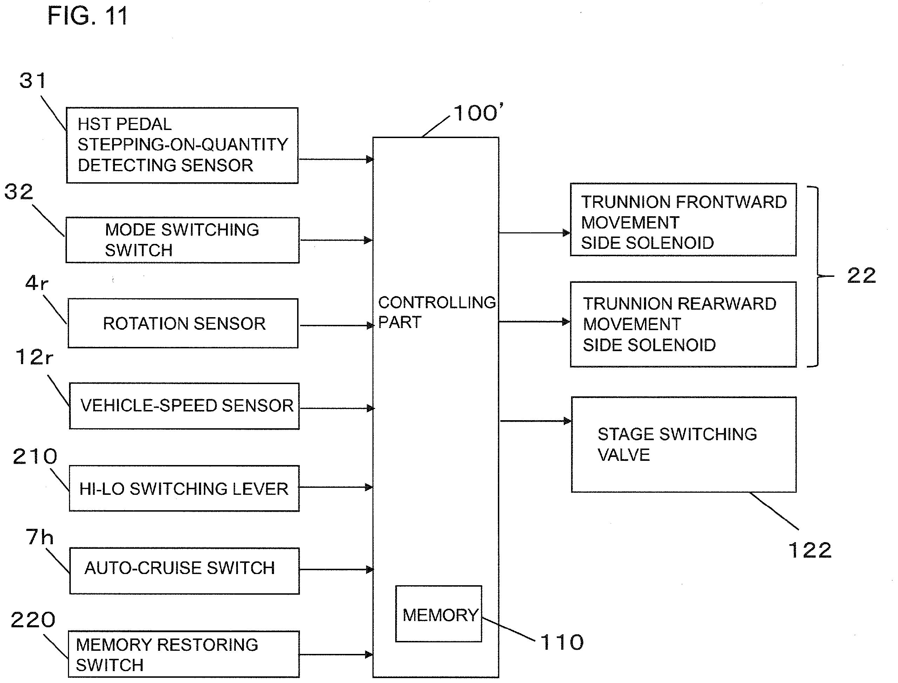

Moreover, in the present Second Embodiment, while the auto-cruise switch 7h (refer to FIGs. 2 and 11) is in the ON state, the Hi-Lo switching lever 210 plays the role of instructing increase/decrease of the vehicle-speed in the auto-cruise mode. By means of this, the number of the switches is to be decreased.

Here, FIG. 10 is an enlarged perspective view in which the Hi-Lo switching lever 210 and the steering handle 7a are viewed from the side of the working seat 7, for showing the arrangement relation of the Hi-Lo switching lever 210 and the steering handle 7a.

Moreover, the memory 110 of the present Second Embodiment has, other than the functions which have been described in the above-mentioned First Embodiment, a function of memorizing the vehicle-speed.

Moreover, in the second tractor 200 of the present Second Embodiment, a memory restoring switch 220 (refer to FIG. 11) is provided which instructs whether or not to make the vehicle-speed of the traveling-vehicle-body shift to the vehicle-speed memorized in the memory 110.

Moreover, a controlling part 100' (refer to FIG. 11) of the present Second Embodiment has, other than the functions of the controlling part 100 which have been described in the above-mentioned First Embodiment, a function of accepting each of the outputtings from the Hi-Lo switching lever 210, the auto-cruise switch 7h, and the memory restoring switch 220, and also controls the action of the stage switching valve 122.

Here, FIG. 11 is an inputting-outputting block diagram which describes the controlling part 100' of the second tractor 200 of the present embodiment.

By the above configuration, the controlling part 100' (refer to FIG. 11) of the present Second Embodiment accepts, while the auto-cruise mode is in the ON state by the instruction from the auto-cruise switch 7h, the instruction of increase/decrease of the rotation number of the variable oil-hydrostatic motor 121m of the second HST 11b, which is carried out by the Hi-Lo switching lever 210, as an instruction of increase/decrease of the vehicle-speed in the auto-cruise mode.

Moreover, the controlling part 100' makes, on an occasion when the auto-cruise mode is switched from the ON state to the OFF state by the auto-cruise switch 7h, the vehicle-speed of the traveling-vehicle-body immediately before the manipulation of the switching be memorized in the memory 110 (refer to FIG. 11). Afterward, the controlling part 100' makes, on an occasion when, after the auto-cruise mode is switched to the ON state by the auto-cruise switch 7h, with manipulation of the worker, a shifting instruction of the vehicle-speed is received from the memory restoring switch 220, the vehicle-speed of the traveling-vehicle-body shift to the vehicle-speed memorized in the memory 110.

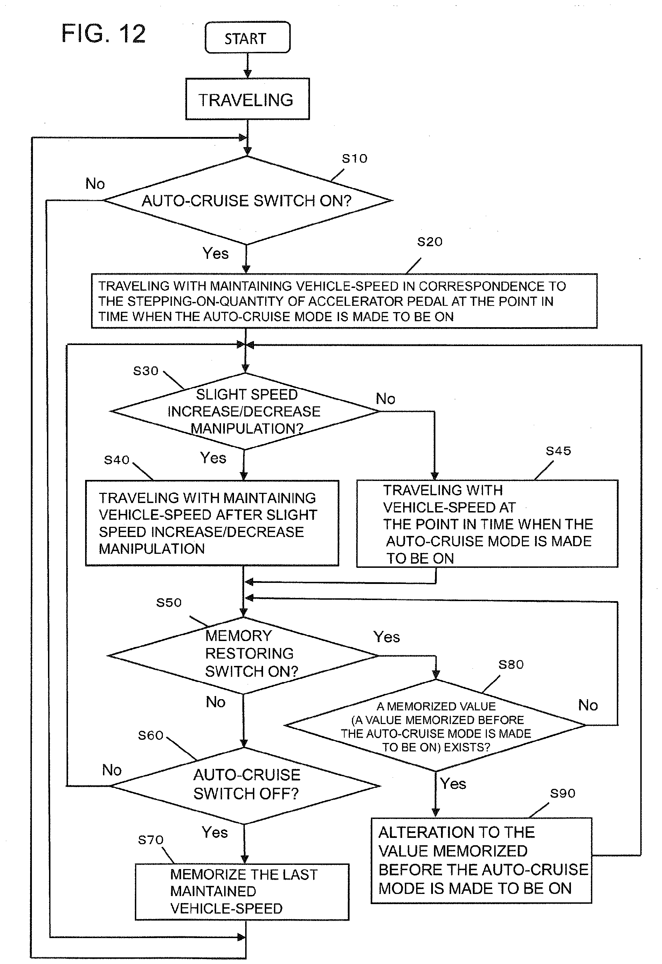

Regarding the controlling action by the controlling part 100', descriptions are further given mainly referring to FIG. 12.

Here, FIG. 12 is a flow diagram of the auto-cruise mode in the present embodiment.

As shown in FIG. 12, if the auto-cruise switch 7h is turned ON by the worker, then the controlling part 100', moving on to Step S20 through Step S10, accepts from the HST pedal stepping-on-quantity detecting sensor 31 the stepping-on-quantity of the HST pedal 7b at the point in time when the controlling part 100' has accepted the ON signal from the auto-cruise switch 7h, in such a manner that traveling is carried out with the vehicle-speed in correspondence to the accepted stepping-on-quantity being maintained, sends an outputting signal to the proportional solenoid valve 22, and carries out controlling so that the rotary-motion-quantity of the trunnion shaft 21t of the oil-hydrostatic pump 21p of the second HST 11b (refer to FIG. 4B) becomes constant (refer to Step S20).

Afterward, if the worker manipulates the Hi-Lo switching lever 210, since the controlling part 100' accepts, as an instruction of increase/decrease of the vehicle-speed in the auto-cruise mode, the instruction by the Hi-Lo switching lever 210, then the controlling part 100', moving on to Step S40 through Step S30, in such a manner that the traveling is carried out with the vehicle-speed after the slight speed increase/decrease manipulation being maintained, sends an outputting signal to the stage switching valve 122. Namely, for example, when the worker switches the Hi-Lo switching lever 210 to the "Hi" side, the controlling part 100', in such a manner that rotary-motion of the trunnion shaft 121t at the side of the variable oil-hydrostatic motor 121m is made to be carried out in a direction for which the vehicle-speed slightly increases, issues an order to the stage switching valve 122, moving on to Step S50.

Additionally, in case the worker does not manipulate the Hi-Lo switching lever 210 (refer to Step S30), the vehicle-speed at the point in time when the ON signal from the auto-cruise switch 7h has been accepted is being maintained (refer to Step S45), moving on to Step S50.

And, in case the controlling part 100', in Step S50, does not accept an ON signal from the memory restoring switch 220, moving on to Step S60, the controlling part 100' judges whether or not the auto-cruise switch 7h has been switched from ON to OFF and, when it is judged that the auto-cruise switch 7h has been switched to OFF, moving on to Step S70, makes the vehicle-speed immediately before the auto-cruise switch 7h is switched from ON to OFF be memorized in the memory 110.

Additionally, the controlling part 100', when in Step S60 it is judged that the auto-cruise switch 7h has not been switched from ON to OFF, returns to the state immediately before Step S30.

Afterward, while the traveling is carried out with the auto-cruise mode in the OFF state, if the worker makes the auto-cruise switch 7h be turned ON again, then the controlling part 100', going through Steps S10 to S50, moves on to Step S80 if the memory restoring switch 220 is judged to have been turned ON. And, the controlling part 100' judges whether or not the vehicle-speed immediately before the auto-cruise switch 7h is switched from ON to OFF is memorized in the memory 110, in a case where it is judged that the vehicle-speed immediately before the auto-cruise switch 7h is switched from ON to OFF is memorized, makes the vehicle-speed alter to the vehicle-speed immediately before the auto-cruise switch 7h is switched from ON to OFF (Step S90) and, afterward, returns to the state immediately before Step S30.

Additionally, in a case where as a result of, in Step S80, judging whether or not the vehicle-speed immediately before the auto-cruise switch 7h is switched from ON to OFF is memorized in the memory 110, it is judged that the vehicle-speed immediately before the auto-cruise switch 7h is switched from ON to OFF is not memorized, the controlling part 100' returns to the state immediately before Step S50.

By means of this, working is carried out at a certain working place with the auto-cruise mode and, subsequently, when road-traveling is carried out, and working is again carried out at the next working place with the auto-cruise mode, the same vehicle-speed as the vehicle-speed of the previous working place is obtained by turning ON the memory restoring switch, which is convenient to the worker.

Additionally, in the above-mentioned embodiment, descriptions have been given regarding the configuration where the stage switching valve 122 switches to the Hi if the Hi-Lo switching lever 210 is manipulated upward, and the stage switching valve 122 switches to the Lo if the Hi-Lo switching lever 210 is manipulated downward but, in addition to this, for example, such a configuration may be allowed that in a case where the Hi-Lo switching lever 210 is at the "Hi" side, a lamp (not shown) which is arranged on the meter panel (not shown) is turned on, and that in a case where the Hi-Lo switching lever 210 is at the "Lo" side, the lamp which is arranged on the meter panel is turned off. By means of this, in addition to the above-mentioned effects, since the lamp turns on with the "Hi", the worker's attention can be invited regarding the speed.

Moreover, in the above-mentioned embodiment, descriptions have been given regarding the configuration where the stage switching valve 122 switches to the Hi if the Hi-Lo switching lever 210 is manipulated upward, and the stage switching valve 122 switches to the Lo if the Hi-Lo switching lever 210 is manipulated downward but, not being limited to this, for example, such a configuration may be allowed that after engine-starting, the stage switching valve 122 gets into the "Hi", and that the stage switching valve 122 gets into the "Lo" with the worker manipulating the Hi-Lo switching lever 210.

Moreover, in the above-mentioned embodiment, descriptions have been given regarding the configuration where the stage switching valve 122 switches to the Hi if the Hi-Lo switching lever 210 is manipulated upward, and the stage switching valve 122 switches to the Lo if the Hi-Lo switching lever 210 is manipulated downward but, not being limited to this, for example, such a configuration may be allowed that if the Hi-Lo switching lever 210 is manipulated either upward or downward, then switching between the "Hi" and the "Lo" can be carried out, that if the stage switching valve 122 is switched to the "Hi", then a lamp (not shown) which is arranged on the meter panel (not shown) is turned on, and that if the stage switching valve 122 is switched to the "Lo", then the lamp which is arranged on the meter panel is turned off. By means of this, the worker becomes able to distinguish the "Hi" and the "Lo".

Moreover, in the above-mentioned embodiment, descriptions have been given regarding the configuration where the stage switching valve 122 switches to the Hi if the Hi-Lo switching lever 210 is manipulated upward, and the stage switching valve 122 switches to the Lo if the Hi-Lo switching lever 210 is manipulated downward but, not being limited to this, for example, such a configuration may be allowed that if the Hi-Lo switching lever 210 is manipulated either upward or downward, then switching between the "Hi" and the "Lo" can be carried out, that if the stage switching valve 122 is switched to the "Lo", then a lamp (not shown) which is arranged on the meter panel (not shown) is turned on, and that if the stage switching valve 122 is switched to the "Hi", then the lamp which is arranged on the meter panel is turned off. By means of this, the worker becomes able to distinguish the "Hi" and the "Lo". Further, in this configuration, such a configuration may be allowed that after engine-starting, the stage switching valve 122 gets into the "Hi", and that the stage switching valve 122 gets into the "Lo" with the worker manipulating the Hi-Lo switching lever 210.

Moreover, in the above-mentioned embodiment, descriptions have been given regarding the configuration where the stage switching valve 122 switches to the Hi if the Hi-Lo switching lever 210 is manipulated upward, and the stage switching valve 122 switches to the Lo if the Hi-Lo switching lever 210 is manipulated downward but, not being limited to this, for example, such a configuration may be allowed that if the Hi-Lo switching lever 210 is manipulated either upward or downward, then switching between the "Hi" and the "Lo" can be carried out, and that if the Hi-Lo switching lever 210 is not held at the "upward" position or at the "downward" position for a constant time or more, then the stage switching valve 122 does not switch.

Moreover, in the above-mentioned embodiment, descriptions have been given regarding the configuration where while the auto-cruise switch 7h (refer to FIGs. 2 and 11) is in the ON state, the Hi-Lo switching lever 210 plays the role of instructing increase/decrease of the vehicle-speed in the auto-cruise mode but, not being limited to this, for example, such a configuration may be allowed that switching between the "Hi" and the "Lo" of the vehicle-speed cannot be carried out even if, during the auto-cruise mode, the Hi-Lo switching lever 210 is manipulated in the up-and-down direction.

Moreover, in the above-mentioned embodiment, descriptions have been given regarding the configuration where with the auto-cruise switch 7h (refer to FIGs. 2 and 11) being utilized, "ON" and "OFF" of the auto-cruise mode is performed but, not being limited to this, for example, such a configuration may be allowed that during the auto-cruise mode the auto-cruise mode can be cancelled with long-pressing manipulation of the Hi-Lo switching lever 210 in one direction, and that, afterward, if the Hi-Lo switching lever 210 is manipulated in the up-and-down direction, then switching between the "Hi" and the "Lo" of the vehicle-speed becomes able to be carried out.

Moreover, in the above-mentioned Second Embodiment descriptions have been given regarding the second tractor 200 for which, with respect to the configurations and functions of the tractor 1 of the above-mentioned First Embodiment, the new configurations and functions further described in Second Embodiment are added, but a tractor which is one example of a working vehicle of the present invention, not being limited to this, for example, may be a third tractor which has the configurations and functions newly described in the above-mentioned Second Embodiment but does not have such configurations and functions or the like, which is a part of the configurations and functions described in the above-mentioned First Embodiment, that traveling-controlling suitable for various working modes becomes able to be carried out with storing beforehand corresponding to various working modes the relation between the HST pedal stepping-on-quantity and the trunnion operation-quantity, for example.

Moreover, in the above-mentioned embodiments, descriptions have been given citing as examples tractors which are for agriculture, but a working vehicle of the present invention, not being limited to this, for example, may be a tractor which is for architecture, or for transport or, alternatively, not being limited to a tractor, for example, may be a different working vehicle.

Additionally, the HST pedal 7b of the above-mentioned embodiment corresponds to one example of a speed-changing instructor of the present invention, and the HST pedal stepping-on-quantity detecting sensor 31 of the present embodiment corresponds to one example of a speed-changing manipulation-quantity detecting sensor of the present invention.

Moreover, in the above-mentioned embodiment, descriptions have been given regarding the configuration with the HST pedal 7b being utilized as one example of the speed-changing instructor of the present invention, but the speed-changing instructor, not being limited to this, for example, may be a speed-changing instructor of a lever type.

A working vehicle of the present invention is useful for a working vehicle such as a tractor or the like which is for agriculture, for architecture, for transport, or the like since a working vehicle for which the number of the switches is to be decreased can be furnished.

## Claims

1. A working vehicle (200), comprising:
an engine (4) which is loaded on a traveling-vehicle-body; a transmission system;
a speed-changing part (21p) which carries out speed-changing and outputting of motive force of the engine (4);
a speed-changing instructor (7b), manipulated by the worker, which instructs the speed-changing in the speed-changing part (21p);
a speed-changing manipulation-quantity detecting sensor (31) which detects a manipulation-quantity by the worker on the speed-changing instructor (7b);
a controlling part (100') which controls the speed-changing part (21p) based on the detecting of the speed-changing manipulation-quantity detecting sensor (31);
a switching part (210), manipulated by the worker, which instructs increase/decrease of the output speed stage of the transmission system after the speed-changing in the speed-changing part (21p); and
an auto-cruise switch (7h) which instructs ON/OFF of an auto-cruise mode for keeping vehicle-speed of the traveling-vehicle-body constant,
**characterized in that**
the controlling part (100') (i) accepts, while the auto-cruise mode is in an OFF state, the instruction by the switching part (210) as the instruction of the increase/decrease of the output speed stage of the transmission system after the speed-changing corresponding to the speed-changing instructor (7b), and (ii) accepts, while the auto-cruise mode is in an ON state by the instruction of the auto-cruise switch (7h), the instruction by the switching part (210) as an instruction of slight increase/decrease of the constant vehicle-speed in the auto-cruise mode.

2. The working vehicle (200) according to claim 1, wherein
the switching part (210) is a switching lever which is arranged on a periphery of a steering handle (7a) provided in the traveling-vehicle-body.

3. The working vehicle (200) according to claim 1 or 2, comprising:
a memory part (110) which memorizes the vehicle-speed; and
a memory restoring switch (220) which instructs whether or not to make the vehicle-speed of the traveling-vehicle-body shift to the vehicle-speed memorized in the memory part (110),
wherein the controlling part (100') makes, on an occasion when the auto-cruise mode is switched from an ON state to an OFF state by the auto-cruise switch (7h), the vehicle-speed of the traveling-vehicle-body immediately before manipulation of the switching be memorized in the memory part (110), and
wherein, the controlling part (100') makes, afterward, on an occasion when, after the auto-cruise mode is switched to an ON state by the auto-cruise switch (7h), the shifting instruction of the vehicle-speed is received from the memory restoring switch (220), the vehicle-speed of the traveling-vehicle-body shift to the vehicle-speed memorized in the memory part (110).

4. The working vehicle (200) according to claim 1, wherein
the speed-changing part (21p) is an oil-hydrostatic pump (21p) which is an inputting part of an oil-hydrostatic type non-step transmission device (11b),
the switching part (210) instructs increase/decrease of a rotation number in a variable oil-hydrostatic motor (121 m) which is an outputting part of the oil-hydrostatic type non-step transmission device (11b),
the speed-changing instructor (7b) is a pedal, and
the controlling part (100') controls the variable oil-hydrostatic motor (121m) based on the instruction of the switching part (210), (i) accepts, while the auto-cruise mode is in an OFF state, the instruction by the switching part (210), not as the instruction in the auto-cruise mode, but as the instruction of two-stage switching of a rotation number in the variable oil-hydrostatic motor to increase/decrease of the speed of the variable oil-hydrostatic motor after the speed-changing corresponding to pedal stepping-on of the speed-changing instructor (7b), and (ii) accepts, while the auto-cruise mode is in an ON state by the instruction of the auto-cruise switch (7h), the instruction by the switching part (210) as the instruction of the slight increase/decrease of the constant vehicle-speed in the auto-cruise mode, while carrying out controlling so that a rotary-motion-quantity of a trunnion shaft (21t) of the oil-hydrostatic pump (21p) becomes constant.

## Patentansprüche

1. Nutzfahrzeug (200), umfassend
einen Motor (4), der auf eine fahrende Fahrzeugkarosserie gestellt ist,
ein Übertragungssystem,
einen Geschwindigkeitsänderungsteil (21p), der die Geschwindigkeitsänderung und den Output von Bewegungskraft des Motors (4) durchführt,
einen Geschwindigkeitsänderungsregler (7b), der vom Arbeiter eingestellt wird, der die Geschwindigkeitsänderung im Geschwindigkeitsänderungsteil (21p) regelt;
einen Sensor (31) zum Nachweis des Werts der Einstellung der Geschwindigkeitsänderung, der einen Wert der Einstellung durch den Arbeiter auf dem Geschwindigkeitsänderungsregler (7b) nachweist,
einen Steuerungsteil (100'), der den Geschwindigkeitsänderungsteil (21p) basierend auf dem Nachweis des Sensors zum Nachweis des Werts der Einstellung der Geschwindigkeitsänderung (31) nachweist,
einen Schaltteil (210), der vom Arbeiter eingestellt wird, der die Erhöhung/Verringerung des Zustands des Geschwindigkeitoutputs des Übertragungssystems nach der Geschwindigekeitsänderung im Geschwindigkeitsänderungsteil (21p) regelt;
einen Tempomat-Schalter (7h) der EIN/AUS eines Tempomat-Modus regelt, um die Fahrzeuggeschwindigkeit der fahrenden Fahrzeugkarosserie konstant zu halten,
**dadurch gekennzeichnet, dass**
der Steuerungsteil (100') (i) während sich der Tempomat-Modus in einem AUS-Zustand befindet, die Regelung durch den Schaltteil (210) als die Regelung der Erhöhung/Verringerung des Schritts der Outputgeschwindigkeit des Übertragungssystems, die dem der Geschwindigkeitsänderungregler (7b) entspricht, akzeptiert und (ii), während sich der Tempomat-Modus in einem EIN-Zustand durch die Regelung des Tempomat-Schalters (7h) befindet, die Regelung durch den Schaltteil (210) als eine Regelung einer geringfügigen Erhöhung/Verringerung der konstanten Fahrzeuggeschwindigkeit im Tempomat-Modus akzeptiert.

2. Nutzfahrzeug (200) nach Anspruch 1, wobei
der Schaltteil (210) ein Schalthebel ist, der auf einem Umfang eines Steuergriffs (7a) angeordnet ist, der in der fahrenden Fahrzeugkarosserie bereitgestellt ist.

3. Nutzfahrzeug (200) nach Anspruch 1 oder 2, umfassend
einen Speicherteil (110), der die Fahrzeuggeschwindigtkeit speichert; und
einen Speicher-Rückstellschalter (220), der regelt, ob die Fahrzeuggeschwindigkeit der fahrenden Fahrzeugkarosserie zur Fahrzeuggeschwindigkeits geschaltet werden soll oder nicht, die im Speicherteil (110) gespeichert ist,
wobei der Steuerungsteil (100') verursacht, wenn der Tempomat-Modus durch den Tempomatschalter (7h) von einem EIN-Zustand in einen AUS-Zustand geschaltet ist, dass die Fahrzeuggeschwindigkeit der fahrenden Fahrzeugkarossierie unmittelbar vor der Einstellung des Schaltens im Speicherteil (110) gespeichert wird, und
wobei der Steuerungsteil (100') dann verursacht, wenn, nachdem der Tempomat-Modus durch den Tempomat-Schalter (7h) in einen EIN-Zustand geschaltet ist, die Schaltregelung der Fahrzeuggeschwindigkeit vom Speicher-Rückstellschalter (220) erhalten wird, dass die Fahrzeuggeschwindigkeit der fahrenden Fahrzeugkarosserie zur Fahrzeuggeschwindigkeit, die im Speicherteil (110) gespeichert ist, geschaltet wird.

4. Nutzfahrzeug (200) nach Anspruch 1, wobei
der Geschwindigkeitsänderungsteil (21p) eine ölhydraulische Pumpe (21p) ist, wobei es sich um einen Input-Teil einer Nicht-Stufen-Übertragungsvorrichtung (11b) der ölhydraulischen Art handelt,
der Schaltteil (210) die Erhöhung/Verringerung einer Drehzahl in einem variablen ölhydraulischen Motor (121m) regelt, wobei es sich um einen Output-Teil der Nicht-Stufen-Übertragungsvorrichtung (11b) der ölhydraulischen Art handelt,
der Geschwindigkeitsänderungsregler (7b) ein Pedal ist, und
der Steuerungsteil (100') den variablen ölhydraulischen Motor (121m) basierend auf der Regelung des Schaltteils (210) steuert, (i) während sich der Tempomat-Modus im AUS-Zustand befindet, die Regelung durch den Schaltteil (210) nicht als die Regelung im Tempomat-Modus, sondern als die Regelung der zweistufigen Schaltung einer Drehzahl im variablen ölhydraulischen Motors akzeptiert, um die Geschwindigkeit des variablen ölhydraulischen Motors nach der Geschwindigkeitsänderung, die dem Betätigen des Pedals des Geschwindigkeitsänderungsreglers (7b) entspricht, zu erhöhen/verringern, und (ii), während sich der Tempomat-Modus im EIN-Zustand durch die Regelung des Tempomat-Schalters (7h) befindet, die Regelung durch den Schaltteil (210) als die Regelung einer geringfügigen Erhöhung/Verringerung der konstanten Fahrzeuggeschwindigkeit im Tempomat-Modus akzeptiert (ii), während die Steuerung derart durchgeführt wird, dass der Wert der Drehbewegung eines Zapfenschafts (21t) der ölhydraulischen Pumpe (21p) konstant wird.

## Revendications

1. Véhicule utilitaire (200), comprenant :
un moteur (4) qui est chargé sur un châssis de véhicule roulant ;
un système de transmission ;
une partie de changement de vitesses (21p) qui effectue des changements de vitesses et qui délivre une force motrice du moteur (4) ;
un levier de changement de vitesses (7b) manipulé par l'opérateur, qui demande le changement de vitesses au sein de la partie de changement de vitesses (21p) ;
un détecteur de quantité de manipulation de changement de vitesses (31) qui détecte une quantité de manipulation, par l'opérateur, du levier de changement de vitesses (7b) ;
une partie de commande (100') qui contrôle la partie de changement de vitesses (21p) sur la base de la détection du détecteur de quantité de manipulation de changement de vitesses (31) ;
une partie de commutation (210), manipulée par l'opérateur, qui provoque l'augmentation/la diminution de la vitesse de sortie du système de transmission après le changement de vitesses au sein de la partie de changement de vitesses (21p) ; et
un bouton de régulation automatique (7h) qui déclenche/arrête un mode de régulation automatique destiné à maintenir la vitesse du châssis de véhicule roulant constante,
**caractérisé en ce que**
la partie de contrôle (100') (i) accepte, pendant que le mode de régulation automatique est OFF, l'instruction de la partie de commutation (210) qui est destinée à augmenter/diminuer la vitesse de sortie du système de transmission après le changement de vitesses correspondant au levier de changement de vitesses (7b), et (ii) accepte, pendant que le mode de régulation automatique est ON sur instruction du bouton de régulation automatique (7h), l'instruction de la partie de commutation (210) qui est destinée à augmenter/diminuer légèrement la vitesse constante du véhicule en mode de régulation automatique.

2. Véhicule utilitaire (200) selon la revendication 1, dans lequel
la partie de commutation (210) est un levier de commutation qui est prévu sur une périphérie d'une poignée de commande (7a) prévue dans le châssis de véhicule roulant.

3. Véhicule utilitaire (200) selon la revendication 1 ou 2, comprenant :
une partie de mémoire (110) qui mémorise la vitesse du véhicule ; et
un bouton de restauration de mémoire (220) qui demande si la vitesse du véhicule roulant doit passer ou non à la vitesse mémorisée dans la partie de mémoire (110),
dans lequel la partie de contrôle (100') mémorise dans la partie de mémoire (110), lorsque le mode de régulation automatique passe d'un état ON à un état OFF à l'aide du bouton de régulation automatique (7h), la vitesse du châssis de véhicule roulant immédiatement avant la manipulation de la partie de commutation, et
dans lequel la partie de contrôle (100') applique, par la suite, lorsque, une fois que le mode de régulation automatique est passé à l'état ON à l'aide du bouton de régulation automatique (7h), l'instruction de changement de vitesse du véhicule est reçue de la part du bouton de restauration de mémoire (220), le passage de la vitesse du châssis de véhicule roulant à la vitesse mémorisée dans la partie de mémoire (110).

4. Véhicule utilitaire (200) selon la revendication 1, dans lequel
la partie de changement de vitesse (21p) est une pompe hydrostatique à huile (21p) qui est une partie d'admission d'un dispositif de transmission linéaire hydrostatique à huile (11b),
la partie de commutation (210) demande l'augmentation/la diminution d'un nombre de rotations d'un moteur hydrostatique à huile variable (121m) qui est une partie de sortie du dispositif de transmission linéaire hydrostatique à huile (11b),
le levier de changement de vitesses (7b) est une pédale, et
la partie de contrôle (100') qui contrôle le moteur hydrostatique à huile variable (121m) sur la base de l'instruction de la partie de commutation (210) (i) accepte, pendant que le mode de régulation automatique est OFF, l'instruction de la partie de commutation (210), non pas comme instruction en mode de régulation automatique, mais comme instruction de commutation en deux étapes d'un nombre de rotations du moteur hydrostatique à huile variable afin d'augmenter/de diminuer la vitesse du moteur hydrostatique à huile variable après le changement de vitesse correspondant à l'actionnement de la pédale en guise de levier de changement de vitesses (7b), et (ii) accepte, pendant que le mode de régulation automatique est ON par l'instruction du bouton de régulation automatique (7h), l'instruction de la partie de commutation (210) comme une instruction de légère augmentation/diminution de la vitesse constante du véhicule en mode de régulation automatique, tout en effectuant un contrôle de sorte qu'une quantité de mouvement de rotation d'un arbre de tourillon (21t) de la pompe hydrostatique à huile (21p) devienne constante.
